# EUROPÄISCHE PATENTSCHRIFT

(11) **EP 1 910 488 B1**
(45) Veröffentlichungstag und Bekanntmachung des Hinweises auf die Patenterteilung: **09.03.2016**
(21) Anmeldenummer: 06762501.2
(22) Anmeldetag: 08.07.2006
(51) Int. Cl.: C09D 183/16, C08L 83/16, C08G 77/62

(54) **VERFAHREN ZUR HERSTELLUNG EINER DÜNNEN GLASARTIGEN BESCHICHTUNG AUF SUBSTRATEN ZUR VERRINGERUNG DER GASPERMEATION**
METHOD FOR THE PRODUCTION OF A THIN GLASSY COATING ON SUBSTRATES IN ORDER TO REDUCE GAS PERMEATION
PROCEDE DE FABRICATION D'UN REVETEMENT MINCE DE TYPE VERRE SUR DES SUBSTRATS POUR REDUIRE LA PERMEABILITE AUX GAZ

(30) Priorität: 26.07.2005 DE 102005034817
(43) Veröffentlichungstag der Anmeldung: 16.04.2008
(73) Patentinhaber: AZ Electronic Materials (Luxembourg) S.à.r.l., 1160 Luxembourg (LU)
(72) Erfinder: BRAND, Stefan, 69493 Hirschberg-Leutershausen (DE); DIERDORF, Andreas, 65719 Hofheim (DE); LIEBE, Hubert, 65207 Wiesbaden (DE); OSTEROD, Frank, 65835 Liederbach (DE); STOJANOVIC, Sandra, 60316 Frankfurt (DE); PRAGER, LUTZ, 04157 Leipzig (DE); MEHNERT, Rainer, 04416 Markkleeberg (DE); BUCHMEISER, Michael, R., 04318 Leipzig (DE)
(74) Vertreter: Rippel, Hans Christoph
(86) Internationale Anmeldenummer: PCT/EP2006/006696
(87) Internationale Veröffentlichungsnummer: WO 2007/012392

(56) Entgegenhaltungen:
- EP-A1- 0 745 974
- EP-A2- 0 899 091

## Beschreibung

Die vorliegende Erfindung betrifft ein Verfahren zur Umwandlung einer dünnen (0,05- 5 µm) Beschichtung, die als Hauptbestandteil Perhydropolysilazan (des weiteren PHPS genannt) oder ein organisches Polysilazan enthält, in eine dichte glasartige Schicht, die sich durch Transparenz und eine hohe Barrierewirkung gegenüber Gasen auszeichnet. Die Umwandlung erfolgt mittels Bestrahlung mit VUV-Licht mit einer Wellenlänge < 230 nm und UV-Licht einer Wellenlänge unterhalb 300 nm bei möglichst niedrigen, für das jeweilige Substrat verträglichen Temperaturen mit möglichst kurzer Behandlungszeit (0,1 - 10 min).

Es ist bekannt (K. Kamiya, T. Tange, T. Hashimoto, H. Nasu, Y. Shimizu, Res. Rep. Fac. Eng. Mie. Univ., 26, 2001, 23-31), dass bei Wärmebehandlung von PHPS-Schichten die Bindungen der im Polymergerüst alternierenden Silizium- und Stickstoffatome hydrolytisch aufgebrochen werden, der Stickstoff und ein Teil des am Silizium gebundenen Wasserstoffs als gasförmige Verbindung, z. B. als Ammoniak entweicht und die sich bildenden Silanole durch Kondensation vernetzen, wodurch sich ein 3D-Gitterwerk aus [≡ Si-O-] Bausteinen ausbildet, das glasartige Eigenschaften besitzt:

-(SiH₂NH)- + 2H₂O → -(Si(OH)₂)- + H₂ + NH₃

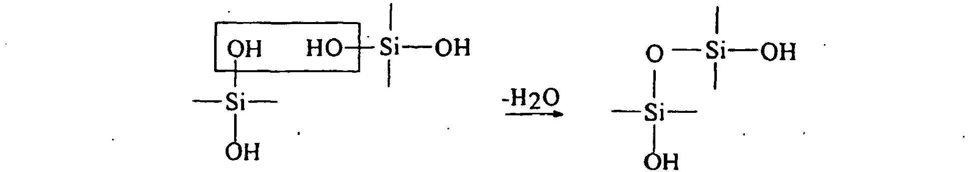

Dieser Prozess kann mit ATR-IR-Spektroskopie anhand der verschwindenden Si-NH-Si- und Si-H- und der sich ausbildenden Si-OH- und Si-O-Si-Banden verfolgt werden.

Nach dem Stand der Technik kann die Umwandlung thermisch initiiert werden (EP 0899091 B1, WO 2004/039904 A1). Zur Beschleunigung des Prozesses bzw. zur Herabsetzung der Reaktionstemperatur werden Katalysatoren auf der Basis von Aminen oder/und Metallcarboxylaten (Pt, Pd) oder/und N-heterozyklischen Verbindungen zugegeben (z.B. WO 2004/039904 A1). Bei Expositionszeiten von 30 min bis zu 24 Stunden werden für den Umwandlungsprozess Temperaturen von Zimmertemperatur bis 400°C benötigt, wobei niedrige Temperaturen lange Expositionszeiten und hohe Temperaturen kurze Expositionszeiten erfordern.

In EP 0 899 091 B1 wird außerdem die Möglichkeit beschrieben, die Härtung einer Schicht ohne Katalysator in einem wässrigen 3 % Triethylaminbad (Dauer 3 min) durchzuführen.

In JP 11 166 157 AA wird ein Verfahren beschrieben, bei dem der präkeramischen Polysilazanschicht ein Photoabsorber zugegeben wird, der durch UV-Bestrahlung Amine abspaltet. Vorgeschlagen werden Wellenlängen von 150 - 400 nm, eine Leistung dieser Strahlung von 50 - 200 mW cm⁻² und Behandlungsdauern zwischen 0,02 und 10 min.

Durch Addition von 0,01 bis 30 Gew.-% Photoinitiatoren werden gemäß JP 11 092 666 AA Polysilazanschichten durch UV-Licht mit Wellenlängen größer 300 nm bei 50 mW cm⁻² und einer Behandlungsdauer um 30 s umgewandelt. Zusätzlich können zur Erhöhung der Härtungsgeschwindigkeit oxidierende Metall-Katalysatoren zugegeben werden (Pt, Pd, Ni...)

Gemäß JP 10 279 362 AA werden Polysilazanschichten (mittleres Molekulargewicht 100 - 50.000) auf Polyesterfolien (5 nm - 5 µm) aufgebracht. Auch hier wird mit Pt- oder Pd-Katalysatoren und/oder eine Aminverbindung die Oxidationsreaktion bei niedrigen Temperaturen beschleunigt. Letztere können als Bestandteil der Polysilazanbeschichtung, als wässrige Lösung in einem Tauchbad oder als Dampfkomponente in der Umgebungsluft während der Wärmebehandlung eingebracht werden. Zusätzlich wird die simultane Bestrahlung mit UV-Licht 150 - 400 nm vorgeschlagen um die als Photoabsorber wirkenden Aminkatalysatoren zu aktivieren. Als UV-Quellen werden Hoch- und Niederdruck-Quecksilberdampflampen, Kohlenstoff- und Xenon-Bogenlampen, Excimerlampen (Wellenlängenbereiche 172 nm, 222 nm und 308 nm) sowie UV-Laser genannt. Bei Behandlungsdauern von 0,05 - 3 min wird eine UV-Leistung von 20 - 300 mW cm⁻² benötigt. Durch eine nachfolgende Wärmebehandlung 10 bis 60 min bis 150°C bei hohem Wasserdampfgehalt (50 - 100 % r. H.) soll eine weitere Verbesserung der Schichteigenschaften explizit hinsichtlich der Gasbarrierewirkung erfolgen. Als Trägermaterialien für die keramisierte Polysilazanschicht werden auch Folien aus Plästikmaterial wie PET, PI, PC, PS, PMMA etc. genannt. Auftragsmethoden für die Polysilazanschicht sind dip painting cloth, roll coating, bar spreading, web spreading, brush coating, spray spreading, flow coating etc. Die nach der Umwandlung erzeugten Schichtdicken liegen um 0,4 µm.

Für die Beschichtung von wärmeempfindlichen Plastikfolien wird in JP 10 212 114 AA eine Umwandlung der Polysilazanschicht mittels IR-Bestrahlung zur Aktivierung optional enthaltener Amine oder Metallcarboxylate beschrieben, die die Umwandlung der Schicht beschleunigen sollen. In JP 10 279 362 AA wird auch die gleichzeitige Verwendung von UV- und IR-Strahlung als förderlich für die Schichtumwandlung erwähnt, wobei fernes IR (4 - 1000 µm) zu bevorzugen ist, weil die Trägerfolie dadurch weniger stark aufgeheizt wird.

Die Umwandlung von Polysilazan durch Elektronenbestrahlung wird in JP 08 143 689 AA beschrieben.

In EP 0 745 974 B1 werden für die Herstellung dünner Schutzschichten für Magnetbänder Oxidationsmethoden unter Verwendung von Ozon, atomarem Sauerstoff und/oder Bestrahlung mit VUV-Photonen unter Anwesenheit von Sauerstoff und Wasserdampf beschrieben. Dadurch können die Behandlungsdauern bei Zimmertemperatur auf wenige Minuten herabgesetzt werden. Als Mechanismus wird dabei die oxidative Wirkung von Ozon bzw. Sauerstoffatomen genannt. Die optional angewandte VUV-Strahlung dient ausschließlich der Erzeugung dieser reaktiven Spezies. Durch gleichzeitige Wärmezufuhr bis zur Toleranzgrenze des Substrates (PET 180 °C) wurden für Polysilazanschichten um 20 nm Umwandlungszeiten im Bereich einiger Sekunden bis einiger Minuten erreicht. Die Wärmezufuhr kann bei der beschriebenen Bandbeschichtung durch engen Kontakt mit beheizten Rollen erfolgen.

Als UV-Strahlenquellen werden Lampen genannt, die Strahlungsanteile mit Wellenlängen unterhalb 200 nm enthalten: z.B. Niederdruck-Quecksilberdampflampen mit Strahlungsanteilen um 185 nm und Excimerlampen mit Strahlungsanteilen um 172 nm. Als Möglichkeit zur Verbesserung der Schichteigenschaften wird auch die Einmischung feiner (5 nm - 40 nm) anorganischer Partikel (Silizium-, Aluminium-, Zirkonium-, Titanoxid...) genannt.

Die mit dem vorstehend genannten Verfahren hergestellten Beschichtungen benötigen, obwohl sie nur eine Schichtdicke von 5 bis 20 nm aufweisen, eine relativ lange Aushärtezeit. Aufgrund der geringen Schichtdicke ist die Fehlstellenbildung recht hoch und die Barrierewirkung der Beschichtungen unbefriedigend.

Aufgabe ist es daher ein Verfahren zur Herstellung transparenter Beschichtungen zur Verfügung zu stellen, dass es erlaubt auch temperaturempfindliche Substrate auf einfache und wirtschaftliche Weise zu beschichten, und die so erhaltenen Beschichtungen sich durch eine hohe Barrierewirkung gegenüber Gasen auszeichnen.

Die vorliegende Erfindung löst diese Aufgabe und betrifft ein Verfahren zur Herstellung einer glasartigen, transparenten Beschichtung auf einem Substrat, durch Beschichten des Substrates mit einer Lösung enthaltend a) ein Polysilazan der Formel (I)

-(SiR'R"-NR"')ₙ- (1)

wobei R', R", R'" gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, vorzugsweise für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)-propyl, 3-(Trimethoxysilylpropyl), wobei es sich bei n um eine ganze Zahl handelt und n so bemessen ist, dass das Polysilazan ein zahlenmittleres Molekulargewicht von 150 bis 150.000 g/mol aufweist, und b) einen Katalysator in einem organischen Lösungsmittel, anschließendes Entfernen des Lösungsmittels durch Verdampfen, wodurch eine Polysilazanschicht mit einer Schichtdicke von 0,05 - 3,0 µm auf dem Substrat verbleibt, und Bestrahlen der Polysilazanschicht mit VUV-Strahlung mit Wellenlängenanteilen < 230 nm und UV-Strahlung mit Wellenlängenanteilen zwischen 230 und 300 nm in einer Wasserdampf enthaltenden Atmosphäre in Anwesenheit von Sauerstoff, aktivem Sauerstoff und gegebenenfalls Stickstoff unter Verwendung eines basischen Katalysators.

Als Katalysator wird ein basischer Katalysator, insbesondere N,N-Diethylethanolamin, N,N-Dimethylethanolamin, Triethanolamin, Triethylamin, 3-Morpholinopropylamin oder N-heterozyklische Verbindungen eingesetzt. Die Katalysatorkonzentrationen liegen üblicherweise im Bereich von 0,1 bis 10 Mol-% bezogen auf das Polysilazan, vorzugsweise 0,5 bis 7 Mol-%.

In einer bevorzugten Ausführungsform werden Lösungen eingesetzt die mindestens ein Perhydropolysilazan der Formel 2 enthalten.

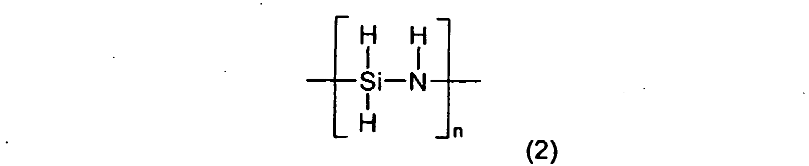

In einer weiteren bevorzugten Ausführungsform enthält die erfindungsgemäße Beschichtung mindestens ein Polysilazan der Formel (3);

-(SiR'R"-NR"')ₙ-(SiR*R**-NR***)ₚ- (3)

wobei R', R", R"', R*, R** und R*** unabhängig voneinander für Wasserstoff oder einen gegebenenfalls substituierten Alkyl-, Aryl-, Vinyl oder (Trialkoxysilyl)alkylRest stehen, wobei es sich bei n und p um eine ganze Zahl handelt und n so bemessen ist, dass das Polysilazan ein zahlenmittleres Molekulargewicht von 150 bis 150.000 g/mol aufweist.

Insbesondere bevorzugt sind Verbindungen in denen
- R', R"' und R*** für Wasserstoff und R", R* und R** für Methyl stehen;
- R', R'" und R*** für Wasserstoff und R", R* für Methyl und R** für Vinyl stehen;
- R', R"', R* und R*** für Wasserstoff und R" und R** für Methyl stehen.

Ebenfalls bevorzugt sind Lösungen, die mindestens ein Polysilazan der Formel (4) enthalten

-(SiR'R"-NR"')ₙ-(SiR*R**-NR***)ₚ -(SiR¹, R²-NR³)_{q}- (4)

wobei R', R", R"', R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.

Insbesondere bevorzugt sind Verbindungen in denen R', R'" und R*** für Wasserstoff und R", R*, R** und R² für Methyl, R³ für (Triethoxysilyl)propyl und R¹ für Alkyl oder Wasserstoff stehen.

Im allgemeinen beträgt der Anteil an Polysilazan im Lösemittel 1 bis 80 Gew.-% Polysilazans, bevorzugt 5 bis 50 Gew.-%, besonders bevorzugt 10 bis 40 Gew.-% enthält.

Als Lösemittel eignen sich besonders organische, vorzugsweise aprotische Lösemittel, die kein Wasser sowie keine reaktiven Gruppen (wie Hydroxyl- oder Amingruppen) enthalten und sich dem Polysilazan gegenüber inert verhalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.

Zusätzlicher Bestandteil der Polysilazanlösung können weitere Bindemittel sein, wie sie üblicherweise zur Herstellung von Lacken verwendet werden. Dabei kann es sich beispielsweise um Celluloseether und -ester, wie Ethylcellulose, Nitrocellulose, Celluloseacetat oder Celluloseacetobutyrat, natürliche Harze wie Kautschuk oder Kolophoniumharze oder Kunstharze, wie Polymerisationsharze oder Kondensationsharze, beispielsweise Aminoplaste, insbesondere Harnstoff- und Melaminformaldehydharze, Alkydharze, Acrylharze, Polyester oder modifizierte Polyester, Epoxide, Polyisocyanate bzw. blockierte Polyisocyanate oder Polysiloxane handeln.

Weiterer Bestandteil der Polysilazanformulierung können Additive, die z.B. Viskosität der Formulierung, Untergrundbenetzung, Filmbildung, Gleitwirkung oder das Ablüftverhalten beeinflussen oder anorganische Nanopartikel wie beispielsweise SiO₂, TiO₂, ZnO, ZrO₂ oder Al₂O₃ sein.

Mit dem erfindungsgemäßen Verfahren ist es möglich eine dichte glasartige Schicht, die sich aufgrund ihrer Riss- und Porenfreiheit durch eine hohe Barrierewirkung gegenüber Gasen auszeichnet, herzustellen.

Die hergestellten Beschichtungen weisen eine Schichtdicke von 100 nm bis 2 µm auf.

Als Substrate werden erfindungsgemäß temperaturempfindliche Plastikfolien oder Plastiksubstrate (z.B. dreidimensionale Substrate, wie PET-Flaschen) mit Dicken von 10 - 100 µm verwendet, insbesondere Folien oder Substrate aus Polyethylenterephthalat (PET), Polyethylennaphthalat (PEN), Polyimid (PI), Polypropylen (PP), Polyethylen (PE), um nur einige Beispiele zu nennen. In einer weiteren bevorzugten Ausführungsform können aber auch Substrate wie Metallfolien, z.B. Aluminium- und Titanfolien, beschichtet werden.

Die hervorragende Barrierewirkung gegenüber Gasen, insbesondere gegenüber Wasserdampf, Sauerstoff und Kohlendioxid, macht die erfindungsgemäßen Beschichtungen besonders einsatzfähig als Barriereschichten für Verpackungsmaterialien und als Schutzschichten gegen korrosive Gase, z.B. zum Beschichten von Gefäßen oder Folien für die Lebensmittelindustrie.
Mit dem erfindungsgemäßen Verfahren gelingt es die in einem ersten Schritt aufgebrachten amorphen Polysilazanschichten bei Temperaturen unter 100°C innerhalb 0.1 bis 10 min in ein glasartiges Siliziumdioxid-Netzwerk zu überführen. Dadurch kann eine Beschichtung auf Folien von Rolle zu Rolle mit Transportgeschwindigkeiten über 1 m min⁻¹ erfolgen. Mit den bisher im Stand der Technik bekannten Verfahren waren hierzu entweder mehrere Verfahrensschritte notwendig, oder die Umwandlung musste bei höheren Temperaturen und unter größerem Zeitaufwand durchgeführt werden.

Durch direkte Initiierung der oxidativen Umwandlung des Polysilazan-Gerüstes in ein dreidimensionales SiOₓ-Netzwerk durch VUV-Photonen gelingt die Umwandlung in kürzester Zeit in einem einzigen Schritt. Der Mechanismus dieses Umwandlungsprozesses kann so erklärt werden, dass im Bereich der Eindringtiefe der VUV-Photonen die -SiH₂-NH-Bausteine durch Absorption so stark angeregt werden, dass die Si-N-Bindung bricht und bei Anwesenheit von Sauerstoff und Wasserdampf die Umwandlung der Schicht erfolgt.

Erfindungsgemäß geeignete Strahlungsquellen sind Excimerstrahler mit einem Emissionsmaximum um 172 nm, Niederdruck-Quecksilberdampflampen mit einer Emissionslinie um 185 nm, sowie Mittel- und Hochdruck-Quecksilberdampflampen mit Wellenlängenanteilen unter 230 nm und Excimerlampen mit einem Emissionsmaximum um 222 nm.

Bei Verwendung von Strahlungsquellen mit Strahlungsanteilen mit Wellenlängen unterhalb 180 nm, wie z. B. Xe₂*-Excimerstrahler mit einem Emissionsmaximum um 172 nm werden bei Anwesenheit von Sauerstoff und/oder Wasserdampf wegen der hohen Absorptionskoeffizienten dieser Gase in diesem Wellenlängenbereich durch Photolyse sehr effizient Ozon und Sauerstoff- bzw. Hydroxylradikale gebildet, die die Oxidation der Polysilazanschicht unterstützen. Beide Mechanismen, Spaltung der Si-N-Bindung und Einwirkung von Ozon, Sauerstoff- und Hydroxylradikalen können aber nur dann wirken, wenn die VUV-Strahlung auch die Oberfläche der Polysilazanschicht erreicht.

Um eine möglichst hohe Dosis an VUV-Strahlung auf die Oberfläche der Schicht zu bringen, ist es deshalb für diesen Wellenlängenbereich erforderlich, die Sauerstoff- und die Wasserdampfkonzentration der Weglänge der Strahlung entsprechend gezielt herabzusetzen, indem der VUV-Behandlungskanal gegebenenfalls mit Stickstoff gespült wird, dem regelbar Sauerstoff und Wasserdampf zugefügt werden.

Die Sauerstoffkonzentration liegt hierbei vorzugsweise im Bereich von 500 - 210 000 ppm.

Wasserdampfkonzentration während des Umwandlungsprozesses hat sich als vorteilhaft und reaktionsfördernd erwiesen, so dass vorzugsweise eine Wasserdampfkonzentration von 1000 bis 4000 ppm.

In einer erfindungsgemäß bevorzugten Ausführungsform wird die Bestrahlung der Schichten in Gegenwart von Ozon durchgeführt. Auf diese Weise kann der aktive Sauerstoff, der für die Durchführung des Verfahrens notwendig ist, auf einfache Weise, durch Zerfall des Ozons während der Bestrahlung, gebildet werden.

Die Wirkung von UV-Licht ohne Wellenlängenanteile unter 180 nm von HgLP-Lampen (185 nm) oder KrCl*-Excimerlampen (222 nm) ist auf die direkte photolytische Wirkung auf die Si-N-Bindung beschränkt, es werden also keine Sauerstoff- oder Hydroxylradikale gebildet. In diesem Falle ist wegen der vernachlässigbaren Absorption keine Beschränkung der Sauerstoff- und Wasserdampfkonzentration erforderlich. Ein Vorteil gegenüber kurzweiligerem Licht besteht auch in der größeren Eindringtiefe in die Polysilazanschicht.

Die Bestrahlung mit der VUV-Strahlung und der UV-Strahlung kann erfindungsgemäß gleichzeitig, aufeinander folgend oder alternierend erfolgen, sowohl mit VUV-Strahlung unterhalb 200 nm, insbesondere unterhalb 180 nm oder mit VUV-Strahlung mit Wellenlängenanteilen von 180 bis 200 nm, und mit UV-Strahlung mit Wellenlängenanteilen zwischen 230 und 300 nm, insbesondere mit UV-Strahlung im Bereich von 240 bis 280 nm. In diesem Falle kann ein Synergieeffekt dadurch entstehen, dass von der Strahlung mit Wellenlängenanteilen unterhalb 200 nm gebildetes Ozon durch Strahlung mit Wellenlängenanteilen zwischen 230 und 300 nm unter Bildung von Sauerstoffradikalen (aktiver Sauerstoff) abgebaut wird.

O₂ + hv (< 180 nm) → O(³P) + O(¹D)

O(³P) + O₂ → O₃

O₃ + hv (< 300 nm) → O2 (¹Δg) + O (¹D)

Wenn dieser Prozess an der Schichtoberfläche oder in der Schicht selbst vonstatten geht, kann der Prozess der Schichtumwandlung beschleunigt werden. Als Strahlenquellen für eine derartige Kombination sind Xe₂*-Excimerstrahler mit Wellenlängenanteilen um 172 nm und Quecksilber-Niederdruck- oder QuecksilberMitteldruck-Lampen mit Wellenlängenanteilen um 254 nm bzw. im Bereich 230 - 280 nm geeignet.

Erfindungsgemäß wird die Ausbildung einer glasartigen Schicht in Gestalt eines SiOₓ-Gitterwerkes durch gleichzeitige Temperaturerhöhung der Schicht beschleunigt und die Qualität der Schicht hinsichtlich ihrer Barriereeigenschaften steigt.

Der Wärmeeintrag kann durch die verwendeten UV-Lampen oder mittels Infrarotstrahlern über die Beschichtung und das Substrat oder mittels Heizregistern über den Gasraum erfolgen. Die obere Temperaturgrenze wird durch die Wärmebeständigkeit des verwendeten Substrats bestimmt. Für PET-Folien beträgt sie etwa 180°C.

In einer bevorzugten Ausführungsform der Erfindung wird das Substrat während des oxidativen Umwandlungsprozesses mittels Infrarot-Strahlern auf Temperaturen zwischen 50 und 200°C (abhängig von der der Temperaturempfindlichkeit des zu beschichtenden Substrats) aufgeheizt und gleichzeitig der Bestrahlung ausgesetzt. In einer weiteren bevorzugten Ausführungsform wird die Gastemperatur im Bestrahlungsraum während des Umwandlungsprozesses auf Temperaturen von 50 bis 200°C erhöht und so eine gleichzeitige Aufwärmung der Beschichtung auf dem Substrat erreicht, was zu einer beschleunigten Umwandlung der Polysilazanschichten führt.

Die Barrierewirkung der Schichten gegenüber Gasen kann durch Permeationsmessungen ermittelt werden, hinsichtlich des Restgehaltes an Si-H-und Si-NH-Si-Bindungen und der sich ausbildenden Si-OH- und Si-O-Si-Bindungen mittels ATR-IR-Messung. Die Morphologie der Schichten wird üblicherweise mittels REM-Messungen ermittelt. Konzentrationsgradienten von Stickstoff und SiOₓ senkrecht zur Schichtoberfläche werden am einfachsten durch SIMS bestimmt

Das erfindungsgemäße Verfahren erlaubt es Beschichtung, Trocknung und oxidative Umwandlung durch Bestrahlung der Polysilazanschicht auf der Kunststofffolie in einem Arbeitsgang, d.h. z.B. bei der Beschichtung von Folien "von Rolle zu Rolle", durchführen zu können. Die erfindungsgemäß erhaltenen Beschichtungen zeichnen sich durch eine hohe Barrierewirkung gegenüber Gasen, wie z.B. Sauerstoff, Kohlendioxid, Luft oder auch gegenüber Wasserdampf aus.

Die Barrierewirkung kann, sofern dies gewünscht ist, noch erhöht werden, durch mehrfache, hintereinander geschaltete Durchführung des erfindungsgemäßen Verfahrens, was in der Regel aber nicht notwendig ist.

### Beispiele

### Substrate:

Polyethylen-Terephtalat (PET), Polyethylen-Naphtalat (PEN), Polyimid (PI), Polyethylen (PE), Polypropylen (PP).

### Polysilazanlösungen:

Perhydropolysilazanlösung in Xylol (NP110, NN110 von Clariant GmbH) oder in Dibutylether (NL120, NN120 von Clariant GmbH).
Zugabe eines basischen Katalysators (z.B. N,N-Diethylethanolamin, Triethanolamin, Triethylamin, 3-Morpholinopropylamin, N-heterozyklische Carbene).
(1 bis 5 % Katalysator auf Polysilazanfeststoff).

### Beschichtungsverfahren:

Tauchen, von Rolle zu Rolle, Spincoating. Danach bei 100°C für 5 min getrocknet.

### Oxidative Umwandlung:

Umwandlung von Perhydropolysilazan (PHPS) in SiOₓ-Netzwerk durch VUV-Strahlung mittels Xe₂*-Excimerstrahler, Emission um 172 nm, VUV-Leistung 30 mW cm⁻², mittels Quecksilberdampf-Niederdruck-Lampe (HgLP-Lampe), Emissionslinie bei 185 nm, VUV-Leistung 10 mW cm⁻².

Die entstandenen SiOₓ-Filme haben Schichtdicken zwischen 200 und 500 nm (REM, Ellipsometrie).

### Bestimmung der Barrierewerte:

OTR (Oxygen Transmission Rate) bei 23°C und 0 % r.F. bzw. 85 % r.F.
WVTR (Water Vapour Transmission Rate) bei 23°C bzw. 40°C und 90 % r.F.
Für eine ca. 200 nm SiOₓ-Schicht ist OTR = 0,5 - 0,8 cm³ m⁻² Tag⁻¹ bar⁻¹
Für eine ca. 300 nm SiOₓ-Schicht liegen die Werte zwischen
OTR = 0,1 - 0,4 cm³ m⁻² Tag⁻¹ bar⁻¹ und WVTR = 0,5 - 1,0 g m⁻² Tag⁻¹ bar⁻¹.
Für zwei SiOₓ-Schichten (insgesamt ca. 400 nm) sind
OTR = 0,05 - 0,15 cm³ m⁻² Tag⁻¹ bar⁻¹ und WVTR = 0,2 - 0,4 g m⁻² Tag⁻¹ bar⁻¹.
Für drei SiOₓ-Schichten (insgesamt ca. 500 nm) sind
OTR < 0,03 cm³ m⁻² Tag⁻¹ bar⁻¹ und WVTR < 0,03 g m⁻² Tag⁻¹ bar⁻¹.

### Beispiel 1 (zum Vergleich):

36 µm PET-Folie beschichtet mit 3 % Perhydropolysilazanlösung in Xylol (NP110) bzw. Dibutylether (NL120) durch Tauchen, getrocknet 5 min bei 100°C, oxidativ umgewandelt mit Xe₂*-Excimerstrahlung 30 mW cm⁻² (1 min, 2500 ppm O₂, 10 % r.F.), Schichtdicke ca. 300 nm.
OTR (23°C, 0% r.F.) = 0,2 bzw. 0,3 cm³ m⁻² Tag⁻¹ bar⁻¹
Unbeschichtete Vergleichsfolie: OTR für 36 µm PET-Folie = 45 - 50 cm³ m⁻² Tag⁻¹ bar⁻¹ Barriere Improvement Factor (BIF) = OTR (unbeschichtet) / OTR (beschichtet)
BIF (NP110) = 225 - 250 bzw. BIF (NL120) = 150 - 167

### Beispiel 2:

36 µm PET-Folie beschichtet mit 3 % Perhydropolysilazanlösung in Xylol (NP110) bzw. Dibutylether (NL120), Zugabe von Aminokatalysator (5 % Triethanolamin auf PHPS), Beschichtung durch Tauchen, getrocknet 5 min bei 100°C, oxidativ umgewandelt mit Xe₂*-Excimerstrahlung 30 mW cm⁻² (1 min, 2500 ppm O₂, 10 % r.F.), Schichtdicke ca. 300 nm.
OTR (23°C, 0% r.F.) = 0,14 bzw. 0,24 cm³ m⁻² Tag⁻¹ bar⁻¹
Unbeschichtete Vergleichsfolie: OTR = 45 - 50 cm³ m⁻² Tag⁻¹ bar⁻¹
BIF (NP110+Kat) = 321 - 357 bzw. BIF (NL120+Kat) = 188 - 208
WVTR (23°C, 90% r.F.) = 1,0 g m⁻² Tag⁻¹ bar⁻¹

### Beispiel 3:

36 µm PET-Folie beschichtet mit 3% Perhydropolysilazanlösung in Xylol (NN110) bzw. Dibutylether (NN120), Zugabe von Aminokatalysator (5 % N,N-Diethylethanolamin auf PHPS), Beschichtung durch Tauchen, getrocknet 5 min bei 100°C, oxidativ umgewandelt mit Xe₂*-Excimerstrahlung 30 mW cm⁻² (1 min, 2500 ppm O₂, 10 % r.F.), Schichtdicke ca. 300 nm.
OTR (23°C, 0% r.F.) = 0,4 bzw. 0,2 cm³ m⁻² Tag⁻¹ bar⁻¹
Unbeschichtete Vergleichsfolie: OTR = 45 - 50 cm³ m⁻² Tag⁻¹ bar⁻¹
BIF (NN110+Kat) = 113 - 125 bzw. BIF (NN120+Kat) = 225 - 250

### Beispiel 4:

36 µm PET-Folie beschichtet mit 3% Perhydropolysilazanlösung in Xylol (NP110), Zugabe von 5% Aminokatalysator auf PHPS (N,N-Diethylethanolamin, Triethylamin, Triethanolamin), Beschichtung durch Tauchen, getrocknet für 5 min bei 100°C, oxidativ umgewandelt mit Xe₂*-Excimerstrahlung 30 mW cm⁻² (1 min, 2500 ppm O₂, 10 % r.F.) bzw. thermisch 30 min bei 65°C, Schichtdicke ca. 300 nm.

| Probe | OTR / cm³ m⁻² d⁻¹ bar⁻¹ bei 0 % r.F. | |
|---|---|---|
| | VUV | thermisch |
| PET unbeschichtet | 45 bis 50 | |
| NP110 + N,N-Diethylethanolamin | 0,3 | 44 |
| NP110 + Triethylamin | 0,2 | 51 |
| NP110 + Triethanolamin | 0,14 | 50 |

### Beispiel 5:

36 µm PET-Folie beschichtet mit 3 % Perhydropolysilazanlösung in Xylol (NP110), Zugabe von 5 % Aminokatalysator auf PHPS (N,N-Diethylethanolamin), Beschichtung durch Tauchen, getrocknet 5 min bei 100°C, oxidativ umgewandelt mit Xe₂*-Excimerstrahlung 30 mW cm⁻² (1 min, 2500 ppm O₂, 10 % r.F.) und dann auf die gleiche Weise noch einmal beschichtet, getrocknet und oxidativ umgewandelt: Insgesamt zwei SiOₓ-Schichten, Schichtdicke 400 - 500 nm.
OTR (23°C, 0% r.F.) = 0,05 - 0,1 cm³ m⁻² Tag⁻¹ bar⁻¹
WVTR (23°C, 90% r.F.) = 0,2 g m⁻² Tag⁻¹ bar⁻¹

### Beispiel 6:

36 µm PET-Folie beschichtet mit 3 % Perhydropolysilazanlösung in Xylol (NP110), Zugabe von 5% Aminokatalysator auf PHPS (N,N-Diethylethanolamin), Beschichtung durch Tauchen, getrocknet 5 min bei 100°C, oxidativ umgewandelt mit Xe₂*-Excimerstrahlung 30 mW cm⁻² (1 min, 2500 ppm O₂, 10 % r.F.) und dann auf die gleiche Weise noch zweimal beschichtet, getrocknet und oxidativ umgewandelt: Insgesamt drei SiOₓ-Schichten, Schichtdicke 500 - 600 nm.
OTR (23°C, 0% r.F.) = 0,01 - 0,03 cm³ m⁻² Tag⁻¹ bar⁻¹
WVTR (23°C, 90 % r.F.) = 0,03 g m⁻² Tag⁻¹ bar⁻¹

### Beispiel 7:

36 µm PET-Folie beschichtet mit 3 % Perhydropolysilazanlösung in Xylol (NP110), Zugabe von 5 % Aminokatalysator auf PHPS (N,N-Diethylethanolamin), Beschichtung durch Tauchen, getrocknet 5 min bei 100°C, oxidativ umgewandelt mit HgLP-Strahlung, VUV-Leistung 10 mW cm⁻² (10 min, 2500 ppm O₂, 10 % r.F.), Schichtdicke ca. 300 nm. OTR (23°C, 0 % r.F.) = 0,2 cm³ m⁻² Tag⁻¹ bar⁻¹

### Beispiel 8:

23 µm PET-Folie beschichtet mit 3 % Perhydropolysilazanlösung in Xylol (NP110) bzw. Dibutylether (NL120), Zugabe von 5 % Aminokatalysator auf PHPS (N,N-Diethylethanolamin), Rolle-zu-Rolle-Beschichtung, oxidativ umgewandelt mit Xe₂*-Excimerstrahlung (Doppellampe, 120 cm schräg) 33 mW cm⁻² (3 m min⁻¹, 2500 ppm O₂, 6 % r.F.), Schichtdicke ca. 400 nm.
OTR (23°C, 0% r.F.) = 0,65 bzw. 0,35 cm³ m⁻² Tag⁻¹ bar⁻¹

### Beispiel 9:

PET-Folie beschichtet mit Polysilazanlösung in Xylol bzw. Dibutylether, Zugabe von Aminokatalysator, Rolle-zu-Rolle Beschichtung, oxidativ umgewandelt mit Xe₂*-Excimerstrahlung 30 mW cm⁻² (O₂, H₂O) + thermisch, Schichtdicke ca. 300 nm.

### Beispiel 10

PET-Flaschen beschichtet mit Polysilazanlösung in Xylol bzw. Dibutylether, Zugabe von Aminokatalysator, Beschichtung durch Tauchen, getrocknet für 5 min bei 65°C, oxidativ umgewandelt mit Xe₂*-Excimerstrahlung 30 mW cm⁻² (5 min , 2500 ppm O₂, 10 % r.F.), Schichtdicke ca. 400 nm.
Barriere Improvement Factor (BIF) für O₂ = 10 und für CO₂ = 3.

### Beispiel 11:

23 µm PET-Folie beschichtet mit 3 % Perhydropolysilazanlösung in Dibutylether (NL120), Zugabe von 5 % Aminokatalysator auf PHPS (N,N-Diethylethanolamin), Rolle-zu-Rolle-Beschichtung, oxidativ umgewandelt mit Xe₂*-Excimerstrahlung 250 mJ cm⁻² und Hg-LP-Strahlung 250 mJ cm⁻² (1 m min⁻¹, 2500 ppm O₂, 7% r.F.), Schichtdicke ca. 400 nm. Gasführung gegen Bahnlaufrichtung von Excimerstrahler zu Hg-LP-Strahlern OTR (23°C, 0 % r.F.) = 1,3 cm³ m⁻² Tag⁻¹ bar⁻¹

### Beispiel 12:

23 µm PET-Folie beschichtet mit 3 % Perhydropolysilazanlösung in Dibutylether (NL120), Zugabe von 5% Aminokatalysator auf PHPS (N,N-Diethylethanolamin), Rolle-zu-Rolle-Beschichtung, oxidativ umgewandelt mit Xe₂*-Excimerstrahlung 250 mJ cm⁻² und Hg-LP-Strahlung 250 mJ cm⁻² (1 m min⁻¹, 10000 ppm O₂, 7 % r.F.), Schichtdicke ca. 400 nm. Gasführung gegen Bahnlaufrichtung von Excimerstrahler zu Hg-LP-Strahlern OTR (23°C, 0% r.F.) = 1,0 cm³ m⁻² Tag⁻¹ bar⁻¹

### Beispiel 13:

23 µm PET-Folie beschichtet mit 3 % Perhydropolysilazanlösung in Dibutylether (NL120), Zugabe von 5 % Aminokatalysator auf PHPS (N,N-Diethylethanolamin), Rolle-zu-Rolle-Beschichtung, oxidativ umgewandelt mit Xe₂*-Excimerstrahlung 100 mJ cm⁻² und Hg-LP-Strahlung 250 mJ cm⁻² (1 m min⁻¹, 2500 ppm O₂, 250 ppm Ozon, 7 % r.F.), Schichtdicke ca. 400 nm. Gasführung gegen Bahnlaufrichtung von Excimerstrahler zu Hg-LP-Strahlern OTR (23°C, 0 % r.F.) = 0.75 cm³ m⁻² Tag⁻¹ bar⁻¹

### Beispiel 14:

23 µm PET-Folie beschichtet mit 3 % Perhydropolysilazanlösung in Dibutylether (NL120), Zugabe von 5 % Aminokatalysator auf PHPS (N,N-Diethylethanolamin), Rolle-zu-Rolle-Beschichtung, oxidativ umgewandelt mit Xe₂*-Excimerstrahlung 500 mJ cm⁻² und Hg-LP-Strahlung 250 mJ cm⁻² (1 m min⁻¹, 2500 ppm O₂, 100 ppm Ozon, 7 % r.F.), Schichtdicke ca. 400 nm. Gasführung gegen Bahnlaufrichtung von Excimerstrahler zu Hg-LP-Strahlern OTR (23°C, 0 % r.F.)

**Tabelle 1: Reichweite von Strahlung (I/I₀ = 1/e = 36.8 %) der Wellenlänge 162, 172 und 182 nm in Stickstoff-Sauerstoff-Gemischen verschiedener Konzentration**

| Sauerstoffkonzentration | Reichweite (I/I₀ = 1/e) | | |
|---|---|---|---|
| | 162 nm-Strahlung | 172 nm-Strahlung | 182 nm-Strahlung |
| 20 % | 0,45 mm | 3 mm | 10 cm |
| 5 % | 1,8 mm | 1,2 cm | 40 cm |
| 1 % | 9,1 mm | 6,0 cm | 2m |
| 2500 ppm | 3,6 cm | 24 cm | 8m |
| 1000 ppm | 9,1 cm | 60 cm | 20 m |
| 100 ppm | 91 cm | 6 m | 200 m |

## Patentansprüche

1. Verfahren zur Herstellung einer glasartigen, transparenten Beschichtung auf einem Substrat, durch Beschichten des Substrates mit einer Lösung enthaltend a) ein Polysilazan der Formel (I)
-(SiR'R"-NR"')ₙ- (1)
wobei R', R", R'" gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist, und b) einen Katalysator In einem organischen Lösungsmittel, anschließendes Entfernen des Lösungsmittels durch Verdampfen, wodurch eine Polysilazanschicht mit einer Schichtdicke von 0,05 - 3,0 um auf dem Substrat verbleibt, und Bestrahlen der Polysilazanschicht mit VUV-Strahlung mit Wellenlängenanteilen < 230 nm und UV-Strahlung mit Wellenlängenantellen zwischen 230 und 300 nm in einer Wasserdampf enthaltenden Atmosphäre in Anwesenheit von Sauerstoff, aktivem Sauerstoff und gegebenenfalls Stickstoff, wobei als Katalysator ein basischer Katalysator, insbesondere N.N-Diethylethanolamin, N,N,-Dimethyl-ethanolamin, Triethanolamin, Triethylamin, 3-Morpholinopropylamin oder N-heterozyklische Verbindungen verwendet werden.

2. Verfahren nach Anspruch 1, **dadurch gekennzeichnet, dass** als Lösemittel ein aprotisches, dem Polysilazan gegenüber inertes Lösemittel verwendet wird.

3. Verfahren nach Anspruch 1 oder 2, **dadurch gekennzeichnet, dass** die Lösung 1 bis 80 Gew.-%, bevorzugt 5 bis 50 Gew.-%, besonders bevorzugt 10 bis 40 Gew.-% des Polysilazans enthält.

4. Verfahren nach mindestens einem der vorhergehenden Ansprüche, **dadurch gekennzeichnet, dass** VUV-Strahlung mit Wellenlängenanteilen < 180 nm verwendet wird.

5. Verfahren nach mindestens einem der Ansprüche 1 bis 3, **dadurch gekennzeichnet, dass** VUV-Strahlung mit Wellenlängenanteilen im Bereich von 180 bis 230 nm verwendet wird.

6. Verfahren nach mindestens einem der vorhergehenden Ansprüche, **dadurch gekennzeichnet, dass** die Bestrahlung mit der VUV- und UV-Strahlung gleichzeitig, aufeinander folgend oder alternierend erfolgt.

7. Verfahren nach mindestens einem der vorhergehenden Ansprüche, **dadurch gekennzeichnet, dass** die Sauerstoffkonzentration 500 - 210 000 ppm beträgt.

8. Verfahren nach mindestens einem der vorhergehenden Ansprüche, **dadurch gekennzeichnet, dass** die Wasserdampfkonzentration 1000 bis 4000 ppm beträgt.

9. Verfahren nach mindestens einem der vorhergehenden Ansprüche, **dadurch gekennzeichnet, dass** während der Bestrahlung zusätzlich Ozon zugeführt wird.

10. Verfahren nach mindestens einem der vorhergehenden Ansprüche, **dadurch gekennzeichnet, dass** R', R", R"' in Formel (1) unabhängig voneinander für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)-propyl, 3-(Trimethoxysilylpropyl) stehen.

11. Verfahren nach mindestens einem der vorhergehenden Ansprüche, **dadurch gekennzeichnet, dass** die Lösung mindestens ein Perhydropolysilazan der Formel (2) 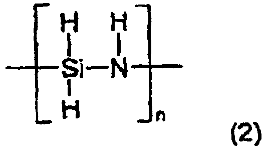 enthält.

12. Verfahren nach mindestens einem der vorhergehenden Ansprüche, **dadurch gekennzeichnet, dass** die Lösung mindestens ein Polysilazan der Formel (3) enthält,
-(SiR'R"-NR"')ₙ-(SiR*R**-NR***)ₚ- (3)
wobei R', R", R"', R*, R** und R*** unabhängig voneinander für Wasserstoff oder einen gegebenenfalls substituierten Alkyl-, Aryl-, Vinyl oder (Trialkoxysilyl)alkyl-Rest stehen, wobei es sich bei n und p um eine ganze Zahl handelt und n so bemessen ist, dass das Polysilazan ein zahlenmittleres Molekulargewicht von 150 bis 150.000 g/mol aufweist.

13. Verfahren nach mindestens einem der vorhergehenden Ansprüche,
**dadurch gekennzeichnet, dass** in Formel (3)
- R, R'" und R*** für Wasserstoff und R", R* und R** für Methyl stehen;
- R', R"' und R*** für Wasserstoff und R", R* für Methyl und R** für Vinyl stehen; oder
- R', R"', R* und R*** für Wasserstoff und R" und R** für Methyl stehen.

14. Verfahren nach mindestens einem der vorhergehenden Ansprüche,
**dadurch gekennzeichnet, dass** die Lösung mindestens ein Polysilazan der Formel (4) enthält,
-(SiR'R"-NR"')ₙ-(SiR*R**-NR***)ₚ- (SiR¹, R²-NR³)_{q}- (4) wobei R', R", R"', R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.

15. Verfahren nach mindestens einem der vorhergehenden Ansprüche,
**dadurch gekennzeichnet, dass** das Substrat während des oxidativen Umwandlungsprozesses bei der Bestrahlung mittels Infrarot-Strahler auf Temperaturen zwischen 50 und 200°C, entsprechend der thermischen Stabilität des Substrates, aufgeheizt wird.

16. Verfahren nach mindestens einem der vorhergehenden Ansprüche, **dadurch gekennzeichnet, dass** während des oxidativen Umwandlungsprozesses die Gastemperatur bei der Bestrahlung im Bestrahlungsraum auf Temperaturen zwischen 50 und 200°C, entsprechend der thermischen Stabilität des Substrates aufgeheizt wird.

17. Verfahren nach mindestens einem der vorhergehenden Ansprüche,
**dadurch gekennzeichnet, dass** das Substrat eine Kunststofffolie mit einer Dicke im Bereich von 10 bis 100 um ist.

18. Verfahren nach mindestens einem der vorhergehenden Ansprüche,
**dadurch gekennzeichnet, dass** das Substrat eine Polyethylenterephthalat-, Polyethylennaphthalat, Polyimid-, Polypropylen- oder Polyethylenfolie ist.

19. Verfahren nach mindestens einem der vorhergehenden Ansprüche, **dadurch gekennzeichnet, dass** die Beschichtung, Trocknung und oxidative Umwandlung durch Bestrahlung der Polysilazanschicht auf der Kunststofffolie in einem Arbeitsgang von Rolle zu Rolle erfolgt.

## Claims

1. A process for producing a glasslike, transparent coating on a substrate, by coating the substrate with a solution comprising a) a polysilazane of the formula (I)
-(SiR'R"-NR"')ₙ- (1)
where R', R", R"' are the same or different and are each independently hydrogen or an optionally substituted alkyl, aryl, vinyl or (trialkoxysilyl)alkyl radical, where n is an integer and n is such that the polysilazane has a number-average molecular weight of from 150 to 150 000 g/mol, and b) a catalyst in an organic solvent,
subsequently removing the solvent by evaporation to leave a polysilazane layer having a layer thickness of 0.05-3.0 µm on the substrate, and irradiating the polysilazane layer with VUV radiation with wavelength fractions < 230 nm and UV radiation with wavelength fractions between 230 and 300 nm in a steam-containing atmosphere in the presence of oxygen, active oxygen and optionally nitrogen wherein the catalyst used is a basic catalyst, in particular N,N-diethylethanolamine, N,N-dimethylethanolamine, triethanolamine, triethylamine, 3-morpholinopropylamine or N-heterocyclic compounds.

2. The process as claimed in claim 1, wherein the solvent used is an aprotic solvent inert toward the polysilazane.

3. The process as claimed in claim 1 or 2, wherein the solution contains from 1 to 80% by weight, preferably from 5 to 50% by weight, more preferably from 10 to 40% by weight of the polysilazane.

4. The process as claimed in at least one of the preceding claims, wherein VUV radiation with wavelength fractions < 180 nm is used.

5. The process as claimed in at least one of claims 1 to 3, wherein VUV radiation with wavelength fractions in the range from 180 to 230 nm is used.

6. The process as claimed in at least one of the preceding claims, wherein the irradiation with the VUV and UV radiation is effected simultaneously, successively or alternately.

7. The process as claimed in at least one of the preceding claims, wherein the oxygen concentration is 500-210 000 ppm.

8. The process as claimed in at least one of the preceding claims, wherein the steam concentration is from 1000 to 4000 ppm.

9. The process as claimed in at least one of the preceding claims, wherein ozone is supplied additionally during the irradiation.

10. The process as claimed in at least one of the preceding claims, wherein R', R", R"' in formula (1) are each independently a radical from the group of hydrogen, methyl, ethyl, propyl, isopropyl, butyl, isobutyl, tert-butyl, phenyl, vinyl or 3-(triethoxysilyl)propyl, 3-(trimethoxysilylpropyl).

11. The process as claimed in at least one of the preceding claims, wherein the solution comprises at least one perhydropolysilazane of the formula (2)

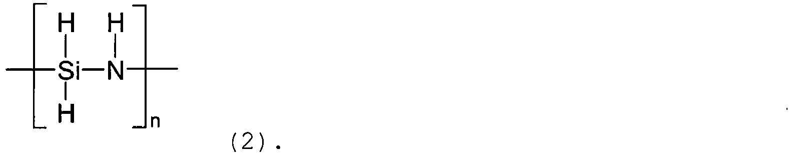

12. The process as claimed in at least one of the preceding claims, wherein the solution comprises at least one polysilazane of the formula (3)
- (SiR'R"-NR"')ₙ-(SiR*R**-NR***)ₚ - (3)
where R', R" R"' R* R** and R*** are each independently hydrogen or an optionally substituted alkyl, aryl, vinyl or (trialkoxysilyl)alkyl radical, where n and p are each an integer and n is such that the polysilazane has a number-average molecular weight of from 150 to 150 000 g/mol.

13. The process as claimed in at least one of the preceding claims, wherein, in formula (3)
- R', R"' and R*** are each hydrogen and R", R* and R** are each methyl;
- R', R"' and R*** are each hydrogen and R", R* are each methyl and R** is vinyl; or
- R', R"', R* and R*** are each hydrogen and R" and R** are each methyl.

14. The process as claimed in at least one of the preceding claims, wherein the solution comprises at least one polysilazane of the formula (4)
-(SiR'R"-NR"')ₙ-(SiR*R**-NR***)ₚ -(SiR¹, R²-NR³)_{q}- (4)
where R', R", R'", R* R**, R*** R¹, R² and R³ are each independently hydrogen or an optionally substituted alkyl, aryl, vinyl or (trialkoxysilyl)alkyl radical, where n, p and q are each an integer and n is such that the polysilazane has a number-average molecular weight of from 150 to 150 000 g/mol.

15. The process as claimed in at least one of the preceding claims, wherein the substrate, during the oxidative conversion process, is heated in the course of the irradiation by means of infrared radiators to temperatures between 50 and 200°C, in accordance with the thermal stability of the substrate.

16. The process as claimed in at least one of the preceding claims, wherein, during the oxidative conversion process, the gas temperature in the course of the irradiation in the irradiation chamber is heated to temperatures between 50 and 200°C, in accordance with the thermal stability of the substrate.

17. The process as claimed in at least one of the preceding claims, wherein the substrate is a plastics film having a thickness in the range from 10 to 100 µm.

18. The process as claimed in at least one of the preceding claims, wherein the substrate is a polyethylene terephthalate, polyethylene naphthalate, polyimide, polypropylene or polyethylene film.

19. The process as claimed in at least one of the preceding claims, wherein the coating, drying and oxidative conversion by irradiation of the polysilazane layer on the plastics film are effected in one working step from roll to roll.

## Revendications

1. Procédé pour la réalisation d'un revêtement transparent, vitreux sur un substrat, par revêtement du substrat par une solution contenant a) un polysilazane de formule (I)
-(SiR'R"-NR"')ₙ- (1)
dans laquelle R', R", R"' sont identiques ou différents et représentent, indépendamment les uns des autres, hydrogène ou un radical alkyle, aryle, vinyle ou (trialcoxysilyl)alkyle, le cas échéant substitué, n étant un nombre entier et n étant dimensionné de manière telle que le polysilazane présente un poids moléculaire numérique moyen de 150 à 150.000 g/mole et b) un catalyseur dans un solvant organique, par élimination consécutive du solvant par évaporation, suite à quoi il reste, sur le substrat, une couche de polysilazane présentant une épaisseur de couche de 0,05-3,0 µm, et par irradiation de la couche de polysilazane par un rayonnement VUV présentant des proportions de longueurs d'onde < 230 nm et par un rayonnement UV présentant des proportions de longueurs d'onde entre 230 et 300 nm dans une atmosphère contenant de la vapeur d'eau en présence d'oxygène, d'oxygène actif et le cas échéant d'azote, un catalyseur basique, en particulier la N,N-diéthyléthanolamine, la N,N,-diméthyléthanolamine, la triéthanolamine, la triéthylamine, la 3-morpholinopropylamine ou des composés N-hétérocycliques, étant utilisé comme catalyseur.

2. Procédé selon la revendication 1, **caractérisé en ce qu'**on utilise, comme solvant, un solvant aprotique, inerte par rapport au polysilazane.

3. Procédé selon la revendication 1 ou 2, **caractérisé en ce que** la solution contient 1 à 80% en poids, de préférence 5 à 50% en poids, de manière particulièrement préférée 10 à 40% en poids du polysilazane.

4. Procédé selon au moins l'une quelconque des revendications susmentionnées, **caractérisé en ce qu'**on utilise un rayonnement VUV présentant des proportions de longueurs d'onde < 180 nm.

5. Procédé selon au moins l'une quelconque des revendications 1 à 3, **caractérisé en ce qu'**on utilise un rayonnement VUV présentant des proportions de longueurs d'onde dans la plage de 180 à 230 nm.

6. Procédé selon au moins l'une quelconque des revendications susmentionnées, **caractérisé en ce que** l'irradiation par le rayonnement VUV et UV est réalisé simultanément, consécutivement ou en alternance.

7. Procédé selon au moins l'une quelconque des revendications susmentionnées, **caractérisé en ce que** la concentration en oxygène est de 500-210.000 ppm.

8. Procédé selon au moins l'une quelconque des revendications susmentionnées, **caractérisé en ce que** la concentration en vapeur d'eau est de 1000 à 4000 ppm.

9. Procédé selon au moins l'une quelconque des revendications susmentionnées, **caractérisé en ce que**, pendant l'irradiation, on introduit en outre de l'ozone.

10. Procédé selon au moins l'une quelconque des revendications susmentionnées, **caractérisé en ce que** R', R", R"' dans la formule (1) représentent, indépendamment les uns des autres, un radical du groupe formé par l'hydrogène, méthyle, éthyle, propyle, iso-propyle, butyle, iso-butyle, tert-butyle, phényle, vinyle ou 3-(triéthoxysilyl)-propyle, 3-(triméthoxysilylpropyle).

11. Procédé selon au moins l'une quelconque des revendications susmentionnées, **caractérisé en ce que** la solution contient au moins un perhydropolysilazane de formule (2)

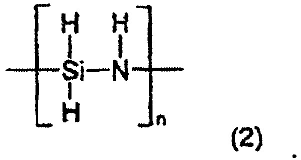

12. Procédé selon au moins l'une quelconque des revendications susmentionnées, **caractérisé en ce que** la solution contient au moins un perhydropolysilazane de formule (3)
-(SiR'R"-NR"')ₙ-(SiR*R**-NR***)ₚ- (3)
dans laquelle R', R", R"', R*, R** et R*** représentent, indépendamment les uns des autres, hydrogène ou un radical alkyle, aryle, vinyle ou (trialcoxysilyl)alkyle, le cas échéant substitué, où il s'agit, pour n et p, d'un nombre entier et où n est dimensionné de manière telle que le polysilazane présente un poids moléculaire numérique moyen de 150 à 150.000 g/mole.

13. Procédé selon au moins l'une quelconque des revendications susmentionnées, **caractérisé en ce que** dans la formule (3)
- R', R"' et R*** représentent hydrogène et R", R* et R** représentent méthyle ;
- R', R"' et R*** représentent hydrogène et R", R* représentent méthyle et R** représente vinyle ; ou
- R', R"', R* et R*** représentent hydrogène et R" et R** représentent méthyle.

14. Procédé selon au moins l'une quelconque des revendications susmentionnées, **caractérisé en ce que** la solution contient au moins un polysilazane de formule (4)
-(SiR'R"-NR"')ₙ-(SiR*R**-NR***)ₚ-(SiR¹,R²-NR³)_{q}- (4)
dans laquelle R', R", R"', R*, R** et R***, R¹, R² et R³ représentent, indépendamment les uns des autres, hydrogène ou un radical alkyle, aryle, vinyle ou (trialcoxysilyl)alkyle, le cas échéant substitué, où il s'agit, pour n, p et q, d'un nombre entier et où n est dimensionné de manière telle que le polysilazane présente un poids moléculaire numérique moyen de 150 à 150.000 g/mole.

15. Procédé selon au moins l'une quelconque des revendications susmentionnées, **caractérisé en ce que** le substrat est chauffé au moyen d'un émetteur d'infrarouges à des températures entre 50 et 200°C, en fonction de la stabilité thermique du substrat, pendant le procédé de conversion par oxydation lors de l'irradiation.

16. Procédé selon au moins l'une quelconque des revendications susmentionnées, **caractérisé en ce que** la température du gaz est chauffée à des températures entre 50 et 200°C, en fonction de la stabilité thermique du substrat, pendant le procédé de conversion par oxydation lors de l'irradiation dans l'espace d'irradiation.

17. Procédé selon au moins l'une quelconque des revendications susmentionnées, **caractérisé en ce que** le substrat est une feuille en matériau synthétique présentant une épaisseur dans la plage de 10 à 100 µm.

18. Procédé selon au moins l'une quelconque des revendications susmentionnées, **caractérisé en ce que** le substrat est une feuille de poly(téréphtalate d'éthylène), de poly(naphtalate d'éthylène), de polyimide, de polypropylène ou de polyéthylène.

19. Procédé selon au moins l'une quelconque des revendications susmentionnées, **caractérisé en ce que** le revêtement, le séchage et la conversion par oxydation ont lieu par irradiation de la couche de polysilazane sur la feuille en matériau synthétique en une opération, d'un rouleau à l'autre.
